## Europäisches Patentamt
## European Patent Office
## Office européen des brevets

(11) Veröffentlichungsnummer: **0 013 325**
**B1**

(12) **EUROPÄISCHE PATENTSCHRIFT**

(45) Veröffentlichungstag der Patentschrift:
03.03.82

(51) Int. Cl.³: **G 01 B 11/14, G 01 B 11/02**

(21) Anmeldenummer: **79104713.7**

(22) Anmeldetag: **27.11.79**

(54) **Optische Messeinrichtung zur Bestimmung des Abstands zwischen kantenförmigen Strukturen auf Oberflächen.**

(30) Priorität: **29.12.78 US 974639**

(43) Veröffentlichungstag der Anmeldung:
**23.07.80 Patentblatt 80/15**

(45) Bekanntmachung des Hinweises auf die Patenterteilung:
**03.03.82 Patentblatt 82/9**

(84) Benannte Vertragsstaaten:
**DE FR GB**

(56) Entgegenhaltungen:
**DE-A1-2 502 289**
**DE-A1-2 853 427**
**US-A-3 858 983**

**IBM TECHNICAL DISCLOSURE BULLETIN,**
**Band 19, Nr. 12, Mai 1977**
**New York,**
**C. J. KIRCHER et al.:**
**"Surface Optical Reflectance Process**
**Monitor"**
**Seiten 4806 bis 4810**

(73) Patentinhaber: **International Business Machines Corporation, Armonk, N.Y. 10504 (US)**

(72) Erfinder: **Kirk, Joseph Pennell, Chelsea Road, Chelsea, New York 12512 (US)**
Erfinder: **Predatsch, Josef, 12 Candy Lane, Hopewell Junction, New York 12533 (US)**
Erfinder: **Su, Lo-Soun, 9 Amherst Lane, Wappingers Falls, New York 12590 (US)**

(74) Vertreter: **Teufel, Fritz, Dipl.-Phys., Schönaicher Strasse 220, D-7030 Böblingen (DE)**

## Optische Messeinrichtung zur Bestimmung des Abstandes zwischen kantenförmigen Strukturen auf Oberflächen

Die Erfindung betrifft eine optische Messeinrichtung nach dem Oberbegriff des Hauptanspruchs. Ein bevorzugtes Anwendungsgebiet dieser Einrichtung ist die Messung von Linienbreiten im Mikrobereich.

Das Messen von Linienbreiten (z.B. von Leiterzügen) wird bei der Herstellung integrierter Schaltkreise schon seit längerem angewandt, um die Charakteristiken von Herstellprozessen oder die Güte von Fertigungseinrichtungen zu bestimmen. Im besonderen stellt die Messung von Linienbreiten ein wertvolles Hilfsmittel zur Beurteilung ganzer Lithographiesysteme oder einzelner Prozesschritte dar, in denen lichtempfindliche Harze (Photoresist) oder Ätzvorgänge auftreten. Mit immer weiter abnehmenden Dimensionen der Schaltkreise wachsen die Anforderungen an die Messverfahren, um Linienbreiten im Mikronbereich und darunter genau und präzise feststellen zu können.

Bei Linienbreiten im Bereich von einem Mikron ist es ausserdem nicht mehr zulässig, die Linie als eindimensionales Objekt zu behandeln. Stattdessen muss das Bild der Linie als dreidimensionales Objekt aufgebracht werden, so dass auch Änderungen der Breite und des Kantenprofils berücksichtigt werden können.

Dieselben Probleme wie bei der Bestimmung von Linienbreiten im Mikronbereich treten auf, wenn statt Linienkanten die Abstände anderer Streuzentren auf die Oberfläche genau bestimmt werden müssen (z.B. die Kanten zweier sich überlappender Schichten.

Die meisten derartigen Messungen im Mikrongebiet werden gegenwärtig mit Hilfe von Raster-Elektronenmikroskop-Aufnahmen hoher Vergrösserungen durchgeführt, bei denen die interessierenden Abmessungen manuell aus den Raster-Aufnahmen entnommen werden können. Dazu ist es aber erforderlich, die Proben in kleine Stücke zu schneiden und, in vielen Fällen, sie mit einem Überzug aus einer dünnen Metallschicht zu versehen.

Die Zerstörung des Messobjekts verbietet den Einsatz der Raster-Elektronenmikroskopie in den meisten Fällen, in denen Masken oder Schaltkreisplättchen gemessen werden sollen. Ausserdem werden wie in allen Verfahren, bei denen zur Durchführung der Messung eine Beurteilung durch den Operator erforderlich ist, unerwünschte Fehler eingeschleppt. Schliesslich ist die Aufnahme von Messdaten mit Raster-Mikroskopie ein ziemlich langwieriges Verfahren, insbesondere dann, wenn die Abmessungen der Schaltkreise immer kleiner werden.

Zur Untersuchung von Oberflächen sind im Stand der Technik ausserdem optische Methoden bekannt geworden, die mit punktförmiger Beleuchtung arbeiten und das von der zu untersuchenden Oberfläche reflektierte Licht auswertet. In der deutschen Offenlegungsschrift 25 02 289 beispielsweise, wird die Oberflächenrauhigkeit durch Auswertung der Streustrahlen bestimmt; in der Einrichtung nach US Patentschrift 3 858 983 können Höhenvariationen auf einer Messoberfläche festgestellt werden. Bisher sind jedoch keine optischen Verfahren und Einrichtungen bekannt geworden mit denen im Mikrobereich liegende Abstände zwischen Kanten unter Berücksichtigung deren dreidimensionaler Struktur mit ausreichender Genauigkeit bestimmt werden konnten.

Die vorliegende Erfindung stellt sich daher die Aufgabe, eine optische Messeinrichtung zur Bestimmung des Abstandes zwischen kantenförmigen Strukturen auf der Oberfläche eines Prüflings anzugeben, deren Genauigkeit im Mikronbereich liegt und die bei der Messung das Messobjekt nicht zerstört oder beeinträchtigt.

Diese Aufgabe wird durch die im Hauptanspruch gekennzeichnete Erfindung gelöst. Ausgestaltungen der Erfindung sind in den Unteransprüchen gekennzeichnet.

In einem bevorzugten Ausführungsbeispiel der Erfindung wird als Lichtquelle ein Laser verwendet, dessen Strahlung auf einem Punkt der Oberfläche der zu untersuchenden Schicht fokussiert wird. Danach wird der Lichtfleck über die interessierenden Stellen abgelenkt, und zwar durch Drehung einer Glasplatte, die in den Lichtweg eingebaut ist. Das an den Kanten und Oberflächen der zu untersuchenden Struktur in der Schicht gestreute Licht wird gesammelt und von zwei Photodetektoren registriert. Die Ausgangssignale der Photodetektoren werden miteinander verglichen, um Signalspitzen festzustellen, die sich aufgrund des gestreuten Lichts ergeben, wenn der Lichtfleck auf der untersuchten Oberfläche eine Kante überstreicht. Zur Feststellung der Lage von Signalspitzen wird auf digitalem Wege eine nach dem Verfahren der kleinsten Quadrate angepasste Kurve dritter Ordnung ermittelt. Die Linienbreite bzw. die Abstände zwischen zwei interessierenden Punkten ergeben sich dann aus den unterschiedlichen Lagen der Signalspitzen in den Ausgangssignalen der beiden Photodetektoren.

Ein Ausführungsbeispiel der Erfindung wird nun im einzelnen anhand von Figuren erläutert.

Es zeigen:

Fig. 1 eine schematische Darstellung einer bevorzugten Ausführungsform der Erfindung,

Fig. 2 eine graphische Darstellung der jeweiligen Ausgangssignale des linken und rechten Photodetektors in Fig. 1 sowie des Photodetektors zur automatischen Fokussierung,

Fign. 3A und 3B die Ausgangssignale des linken und des rechten Photodetektors, wie sie von Linien in einem Photoresist bzw. einem Leiterzug aus Chrom erzeugt werden und

Fig. 4 ein Flussdiagramm der Berechnungen, die zur Analyse der Daten des Systems nach Fig. 1 verwendet werden.

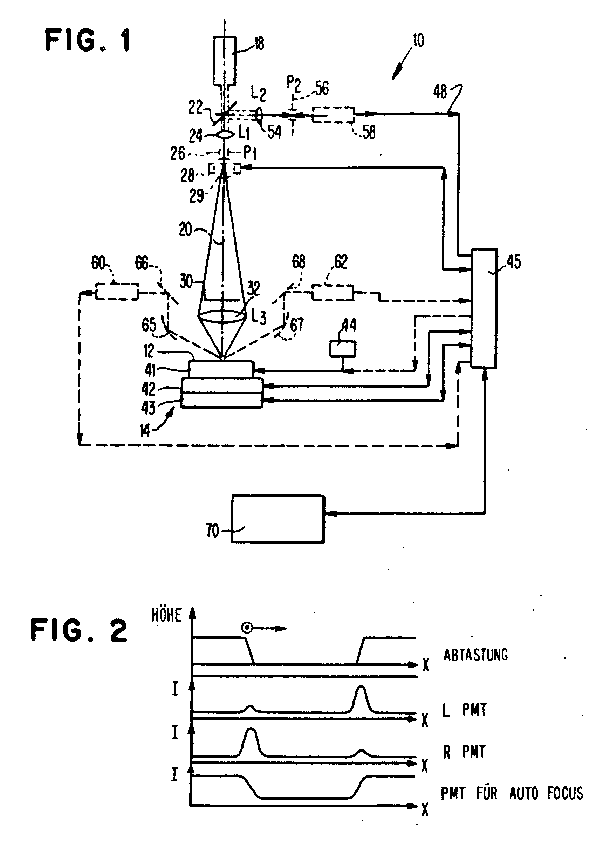

Fig. 1 zeigt eine bevorzugte Ausführungsform der Erfindung; sie besteht aus einem System 10 zur Messung von Mikrolinienbreiten an einer Halbleiterscheibe oder einer Maske 12 auf einer Unterlage 14. Zu dem System gehört eine Lichtquelle 18, vorzugsweise mit hoher Intensität zur Erzeugung eines hohen Signal-/Rauschverhältnisses. Als Lichtquelle ist ein Helium-Neon-Laser geeignet, beispielsweise das Modell 14T der Firma Spectra Physics. Dieser Laser hat eine Ausgangsleistung von 2 Milliwatt und sendet Licht mit einer Wellenlänge von 632,8 nm aus; diese Frequenz ist so gewählt, dass übliche Photoresistmaterialien nicht belichtet werden. Nach Wunsch können auch andere Lichtquellen Verwendung finden, der Einsatz von Laserlicht der obigen oder einer nahegelegenen Frequenz ist jedoch vorteilhaft. Die Quelle 18 strahlt ihr Licht längs des Lichtweges 20 in Richtung Unterlage 14 aus. Ein üblicher Strahlteiler 22 ist im Lichtweg 20 vor einer Objektivlinse 24 angeordnet. Im Ausführungsbeispiel hat Linse 24 eine Vergrösserung 10 x. Unter der Linse 24 ist eine Lochblende 26 angebracht, danach folgt im Lichtweg ein Mikroabtastgerät 29 mit einem Glasblock 28, der den Lichtstrahl seitlich in bezug auf Unterlagen 14 ablenken kann. Im Ausführungsbeispiel wurde als Abtastgerät das Modell Nr. G300PD der Firma General Scanning Inc. verwendet. Der dort eingebaute Glasblock hat rechtwinklige prismatische Gestalt.

Im Lichtweg ist ferner eine Viertelwellenlänge-Platte 30 angeordnet; darauf folgt eine 40X Dunkelfeldobjektiv-Linse mit Bezugszeichen 32, mit der Licht von der Quelle 18 auf einen Wafer oder eine sonstige Oberfläche auf Unterlage 14 fokussiert wird.

Der Justiertisch besteht aus einem Abschnit 41 zum Fokussieren, einer Stufe 42 zur Verschiebung in X-Richtung und einer Stufe 43 zur Verschiebung in Y-Richtung. Beim Abschnitt zur Fokussierung handelt es sich vorzugsweise um eine übliche Hebevorrichtung, die entweder manuell durch eine Fokussiersteuereinrichtung 44 betätigt wird oder über eine Koppelvorrichtung 45 durch eine Steuereinrichtung 70. Eine dazu geeignete Steuereinrichtung für Forschungsgeräte wird beispielsweise von IBM unter der Modellnummer 7406 vertrieben. Im System ist weiterhin eine automatische Fokussierschleife 48 eingebaut, die aus einer 10X Linse 54, einer Lochblende 56 und einer Photo-Multiplierröhre (Photo-Vervierfacher) 58 besteht. Bei dem verwendeten Photo-Multiplier handelt es sich um das EMI Modell 9558, das für Licht bei der Wellenlänge 632,8 nm empfindlich ist. Das Ausgangssignal des Photo-Multipliers wird an die Koppelvorrichtung 45 gegeben, die wiederum ein Stellsignal an den Fokussierabschnitt 41 liefert, mit dem die automatische Brennweiteneinstellung erfolgt. Die Fokussiersteuerung kann auch manuell bedient werden, wenn auf einen ausgewählten Punkt auf der Halbleiterscheibe fokussiert werden soll.

Bei den Verschiebestufen 42 und 43 in X- bzw. Y-Richtung handelt es sich um einen üblichen X-Y-Tisch, wie er beispielsweise von der Firma Moor Company bezogen werden kann. Die Verschiebestufen sind jeweils mit dem Koppler 45 verbunden und werden in Übereinstimmung mit Abtasteinheit 29 bewegt, die ebenfalls an Koppler 45 angeschlossen ist. Eine zweite Photo-Multiplierröhre 60 und eine dritte Photo-Multiplierröhre 62 sind mit ihren Ausgängen ebenfalls an Koppler 45 angeschlossen. Photomultiplier 60 empfängt Licht, das auf der linken Seite von Tisch 14 unter einem schiefen Winkel gestreut wird; dieses Licht wird durch Spiegel 65 und Reflektor 66 gesammelt. Photomultiplier 62 sammelt über Spiegel 67 und Reflektor 68 das Licht, das auf der rechten Seite des Tisches gestreut wird.

Der Koppler seinerseits wird durch die digitale Verarbeitungseinheit 70 gesteuert, im Ausführungsbeispiel ein Digitalrechner der Type IBM 5100. Andere Rechnertypen können natürlich ebenfalls Verwendung finden.

Beim Betrieb des Systems wird das Licht des Lasers zuerst durch Linse 24 auf Blende 26 fokussiert und anschliessend durch die Mikroskoplinse 32 auf der Oberfläche einer Halbleiterscheibe oder einer Maske. Das Fokussieren des Lichtflecks erfolgt durch das Servosystem mit Rückkoppelsignalen aus der Photo-Multiplierröhre 58 für die automatische Fokussierung (Autofokus). Das an der Oberfläche der Halbleiterscheibe reflektierte Laserlicht gelangt durch die Filterblende 26, wird auf Blende 56 abgebildet und durch Photomultiplier 58 gesammelt. Das in den Photomultiplier gelangte Licht erreicht ein Maximum, wenn der Laserfleck auf der Waferoberfläche fokussiert ist und verringert seine Intensität bei Defokussierung. Die Einstellung der Fokussierung erfolgt, indem der Fokussierabschnitt 41 oder die Objektivlinse 32 vertikal auf- oder abbewegt werden, und zwar unter Steuerung der Steuereinheit 70 oder wenn gewünscht, mit Hillfe der manuellen Steuerung 44.

Die Viertelwellenlängen-Platte und ein Polarisator sind in das System eingefügt, um zu verhindern, dass Licht, das von der oberen Fläche des Glasblocks zum Abtasten reflektiert wurde, zu Störungen des Defokussiersignals führt.

Zur Abtastung wird der Lichtfleck des Lasers auf der Waferoberfläche auf eine Grösse von ungefähr 0,6 Mikron fokussiert. Das führt zu einer sehr hohen Lichtintensität. Die Ausgangssignale des Photo-Multipliers weisen daher ein sehr hohes Signal-Rauschverhältnis auf. Die Abtastbewegung wird durch Drehen des Glasblocks in der Abtasteinrichtung 28 hervorgerufen. Die Lage des Lichtflecks auf der Halbleiterscheibe steht daher zur Winkeldrehung des Glases in Beziehung. Wenn der Lichtfleck über Kanten auf der Halbleiterscheibe wandert, wird das Licht an diesen Kanten gestreut und durch die Spiegel 65, 67 gesammelt. Das gesammelte Licht wird anschliessend den Photo-Multipliern 60 bzw. 62 zu-

geführt. Die Ausgangssignale I des linken Photomultipliers (L PMT), des rechten Photomultipliers (R PMT) und des Autofokus-Photomultipliers sind in Fig. 2 für den Fall eines Lichtflecks mit 0,6 Mikron Grösse dargestellt, der über eine Vertiefung in der Halbleiteroberfläche abgelenkt wird.

Im oberen Teil von Fig. 2 ist das Höhenprofil der Vertiefung als Funktion der Ortskoordinate x des Abtast-Lichtflecks (gemessen in Abtastrichtung) aufgetragen, ebenso die Ausgangssignale I, die sich bei der jeweiligen Stellung x des Lichtflecks ergeben.

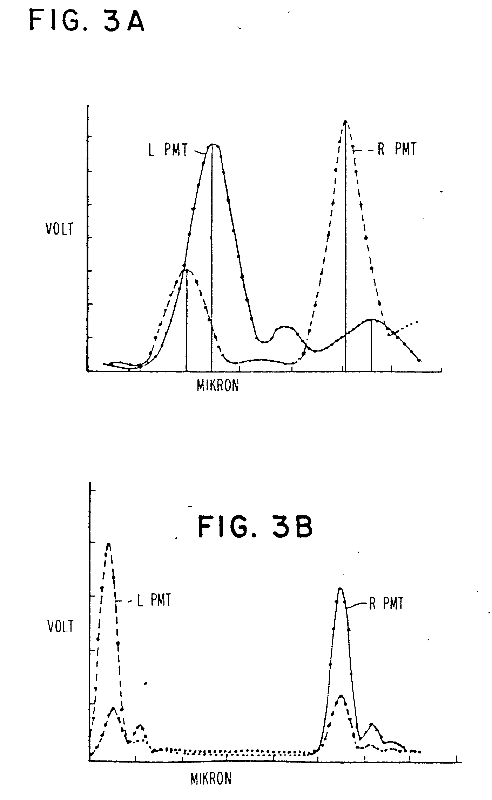

Es wäre auch möglich, die Photomultiplier in einem System mit Hellfeldbeleuchtung zu betreiben; man hat jedoch festgestellt, dass die Dunkelfeldbeleuchtung eine bessere Kantenidentifikation ermöglicht. Fign. 3A und 3B zeigen die Signale des linken und rechten Photomultipliers für Bilder, die aus Photoresistsstrukturen bzw. Chromstrukturen bestehen.

Gemäss der Darstellung in Fig. 2 weisen die Signale eine Spitze auf, wenn der Lichtfleck eine Kante überstreicht. Bei der Abtastung der linken Kante in Fig. 2 ist das Signal des rechten Photomultipliers 62 höher als das des linken Photomultipliers; bei der Abtastung der rechten Kante sind die Signalhöhen umgekehrt.

Die höhere Spitze wurde als Primärspitze bezeichnet, die niedrigere als Sekundärspitze. Es erscheint, als ob die Primärspitze durch Licht hervorgerufen wird, dass vom unteren Teil der überstrichenen Kante gestreut wird, die Sekundärspitze durch Licht, das im oberen Teil der Kante gestreut wurde. Die in den Fign. 3A und 3B dargestellten Lagen der Spitzen wurden bestimmt, indem die Ausgangssignale der Photomultiplier in Digitalform überführt wurden und zur Festlegung der Spitzenlagen ein Polynom dritter Ordnung nach der Methode der kleinsten Quadrate angepasst wurde. Die Verwendung derartiger Verfahren zur Reduktion digitaler Daten ist im Stand der Technik bekannt. Beispielsweise wird die hier angewandte Technik genauer im Kapitel 8 des Buchs «Data Reduction and Error Analysis» von Philip R. Bevington, McGraw Hill, 1969, beschrieben.

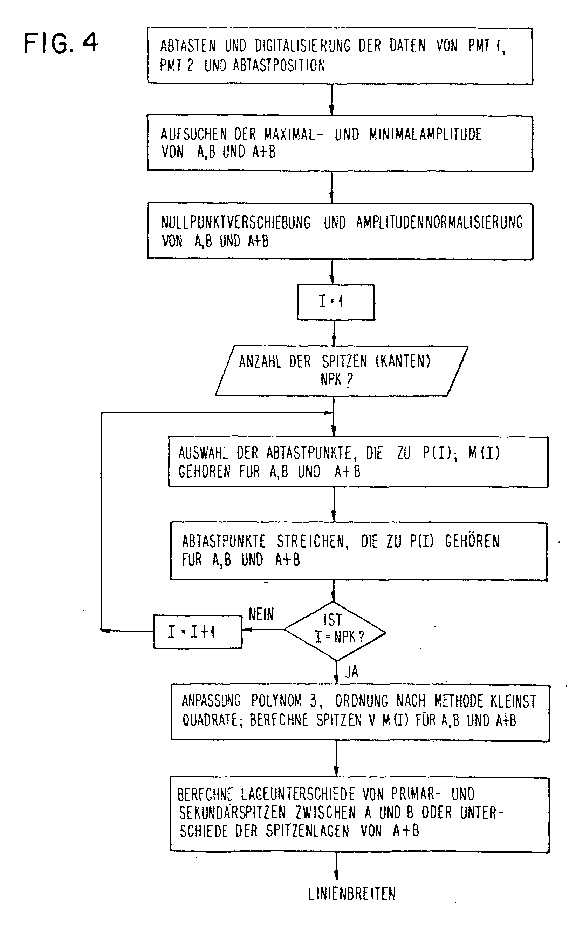

Fig. 4 zeigt ein Flussdiagramm mit den Schritten zur Berechnung des Unterschieds der Lagen der Primär- und Sekundärspitze und zur Berechnung der Linienbreite. Aus den Fign. 3A und 3B ist ersichtlich, dass der Abstand zwischen den Primärspitzen den Abstand darstellt, der in der Vertiefung nach Fig. 2 in grösserer Tiefe gemessen wird; der Abstand zwischen den Sekundärspitzen stellt den Abstand zwischen den oberen Kanten der Vertiefung in Fig. 2 dar. Die Daten für jeden dieser Werte werden gerechnet, ebenso wie ein Mittelwert, der sich ergibt, wenn die Summe der Werte von Primär- und Sekundärspitzen beider Photomultiplier herangezogen wird.

Messungen der Linienbreite sowohl in X- als auch in Y-Richtung ist möglich, indem die Halterung der Rastereinheit bezüglich der optischen Achse um 90° gedreht wird. Stattdessen können aber auch zwei Ablenkeinheiten in den Lichtweg eingebaut werden, um eine zweidimensionale Abtastung durchzuführen.

Zur Feststellung der Lage von Spitzen in den Ausgangssignalen der Photomultiplier können auch andere Schaltkreise herangezogen werden, beispielsweise ein Kurvenschreiber mit Schaltungseinrichtungen zur Bestimmung von Signalspitzen.

Das bisher beschriebene Ausführungsbeispiel bezog sich auf die Bestimmung der Breite einer Linie oder einer Vertiefung; dasselbe Verfahren kann jedoch auch zur Messung der Überlappung von Schichten verwendet werden oder zur Abstandsmessung zwischen ausgewählten Punkten auf der Oberfläche eines Wafers.

Mit dem Instrument kann auch eine visuelle Beobachtung der Oberfläche erfolgen, wenn eine Beleuchtungsvorrichtung eingebaut wird, wie sie üblicherweise bei Mikroskopen Verwendung findet, und ausserdem eine Linse zur Beobachtung des Lichtes, das von der Oberfläche reflektiert wurde.

Eine weitere Einsatzmöglichkeit des Geräts besteht in der Messung von Änderungen der Linienbreite; dazu werden mehrere Abtastungen in bestimmten Abständen voneinander senkrecht zur Richtung der Linie durchgeführt. Aus den Ergebnissen dieser Mehrfach-Abtastungen kann dann ein Modell der sich ändernden Linienbreite erstellt werden.

In der hier beschriebenen Konfiguration können auch Bilder von Linien im Submikronbereich gemessen werden, wenn ein Laser mit einer kürzeren Wellenlänge eingebaut wird.

Das hier vorgeschlagene System stellt eine beträchtliche Verbesserung gegenüber den bisherigen Verfahren mit Raster-Elektronenmikroskopie dar, da es im Gegensatz dazu die Probe bei der Messung nicht zerstört. Überdies stellt das System ein sehr genaues Verfahren zur Messung von Linienbreiten bis herab zu einem Mikron und darunter zur Verfügung, es kann vollautomatisch betrieben werden und erlaubt einen grossen Durchsatz bei der Durchführung derartiger Messungen.

**Patentanspruch**

1. Optische Messeinrichtungen zur Bestimmung des Abstandes zwischen kantenförmigen Strukturen auf Oberflächen, insbesondere von Linienbreiten, dadurch gekennzeichnet, dass fokussiertes Licht einer Quelle (18) längs einer Linie über die zu untersuchende Oberfläche (12) geführt und das an Kanten gestreute Licht mit zwei symmetrisch zur optischen Achse angeordneten Photoempfängern (60, 62) erfasst wird und dass eine elektronische Auswerteschaltung (70) zur Ermittlung des gesuchten Abstandes zwischen zwei kantenförmigen Strukturen aus der Lage der Spitzen der von den beiden Photoempfängern abgegebenen Signale vorgesehen ist.

2. Einrichtung nach Anspruch 1, dadurch gekennzeichnet, dass das unter einem geringen Winkel von der Oberfläche ausgehende Licht z.B.

mit Reflektoren (65, 67) gesammelt und den Photoempfängern z.B. über Spiegel (66, 68) zugeführt wird.

3. Einrichtung nach einem der Ansprüche 1 oder 2, dadurch gekennzeichnet, dass der fokussierte Lichtfleck eine Ausdehnung von ungefähr 0,6 μ aufweist.

4. Einrichtung nach einem der Ansprüche 1 bis 3, dadurch gekennzeichnet, dass die Ablenkung des fokussierten Lichtflecks über die Oberfläche durch eine sich drehende Glasplatte (28) erfolgt.

5. Einrichtung nach einem der Ansprüche 1 bis 4, dadurch gekennzeichnet, dass zur automatischen Regelung der Grösse des Lichtflecks auf der zu untersuchenden Oberfläche ein reflektiertes Bild des Lichtflecks auf einem Photoempfänger (58) abgebildet und daraus ein Stellsignal zur Fokussierung abgeleitet wird.

6. Einrichtung nach einem der Ansprüche 1 bis 5, dadurch gekennzeichnet, dass eine flächenhafte Abtastung unter Verwendung von zwei Ablenkeinheiten (28) erfolgt.

7. Einrichtung nach einem der Ansprüche 1 bis 6, dadurch gekennzeichnet, dass als Lichtquelle (18) ein Helium-Neon-Laser verwendet wird.

## Claims

1. An optical measuring device for determining the spacing between edge-shaped structures on surfaces, especially of line widths, characterized in that focused light from a source (18) is moved along a line across the surface (12) to be tested and the light scattered at the edges is detected by means of two photodetectors (60, 62) arranged symmetrically to the optical axis, and that an electronic evaluator circuit (70) is provided for determining the desired spacing between two edge-shaped structures from the position of the peaks of the signals generated by the two photodetectors.

2. The device according to claim 1, characterized in that the light emitted by the surface at a low angle is collected, for example, by reflectors (65, 67) and fed to the photodetectors via mirrors (66, 68), for example.

3. The device according to any one of the claims 1 or 2, characterized in that the focused light spot has a size of about 0.6 μ.

4. The device according to any one of the claims 1 to 3, characterized in that deflection of the focused light spot across the surface is effected by a rotating glass plate (28).

5. The device according to any one of the claims 1 to 4, characterized in that for the automatic control of the size of the light spot on the surface to be tested, a reflected image of the light spot is produced on a photodetector (58) and a feed-back signal for focusing is derived therefrom.

6. The device according to any one of the claims 1 to 5, characterized in that area scanning is effected using two deflectors (28).

7. The device according to any one of the claims 1 to 6, characterized in that a helium neon laser is used as a light source (18).

## Revendications

1. Dispositif de mesure optique pour déterminer l'espacement entre des structures à bords sur des surfaces, en particulier de largeurs de ligne, caractérisé en ce que: la lumière focalisée d'une source (18) passe le long d'une ligne sur la surface à examiner (12), la lumière dispersée aux bords est saisie par deux photodétecteurs (60, 62) disposés symétriquement par rapport à l'axe optique, et un circuit d'évaluation électronique (70) est prévu pour déterminer l'espacement désiré entre deux structures à bords à partir de la position des crêtes des signaux émis par les deux photodétecteurs.

2. Dispositif selon la revendication 1, caractérisé en ce que la lumière émise par la surface selon un angle faible est concentrée, par exemple, par des réflecteurs (65, 67) et dirigée vers les photodétecteurs, par exemple par l'intermédiaire de miroirs (66, 68).

3. Dispositif selon la revendication 1 ou 2, caractérisé en ce que la dimension de la tache de lumière focalisée est d'environ 0,6 microns.

4. Dispositif selon l'une quelconque des revendications 1 à 3, caractérisé en ce que la déflexion de la tache de lumière focalisée sur la surface est effectuée par une plaque de verre rotative (28).

5. Dispositif selon l'une quelconque des revendications 1 à 4, caractérisé en ce que, pour l'ajustage automatique de la dimension de la tache de lumière sur la surface à examiner, on produit une image réfléchie de la tache de lumière sur un photodétecteur (58) et on dérive de celui-ci un signal de positionnement pour la focalisation.

6. Dispositif selon l'une des revendications 1 à 5, caractérisé en ce que deux unités de déflection (28) sont utilisées pour le balayage de la surface.

7. Dispositif selon l'une quelconque des revendications 1 à 6, caractérisé en ce que on utilise comme source de lumière (18) un laser d'hélium-néon.

# FIG. 1

# FIG. 2

HÖHE

ABTASTUNG

L PMT

R PMT

PMT FÜR AUTO FOCUS

# FIG. 3A

# FIG. 3B

0 013 325

FIG. 4

ABTASTEN UND DIGITALISIERUNG DER DATEN VON PMT 1, PMT 2 UND ABTASTPOSITION

AUFSUCHEN DER MAXIMAL- UND MINIMALAMPLITUDE VON A,B UND A+B

NULLPUNKTVERSCHIEBUNG UND AMPLITUDENNORMALISIERUNG VON A,B UND A+B

I = 1

ANZAHL DER SPITZEN (KANTEN) NPK ?

AUSWAHL DER ABTASTPUNKTE, DIE ZU P(I); M(I) GEHOREN FUR A,B UND A+B

ABTASTPUNKTE STREICHEN, DIE ZU P(I) GEHÖREN FUR A,B UND A+B

NEIN        IST I = NPK ?        I = I+1

JA

ANPASSUNG POLYNOM 3. ORDNUNG NACH METHODE KLEINST QUADRATE; BERECHNE SPITZEN V M(I) FÜR A,B UND A+B

BERECHNE LAGEUNTERSCHIEDE VON PRIMAR- UND SEKUNDARSPITZEN ZWISCHEN A UND B ODER UNTER- SCHIEDE DER SPITZENLAGEN VON A+B

LINIENBREITEN

11